# EUROPEAN PATENT APPLICATION

(11) **EP 4 765 008 A1**
(43) Date of publication of application: **24.06.2026**
(21) Application number: 25831004.4
(22) Date of filing: 11.04.2025
(51) Int. Cl.: G06Q 50/40, B60R 16/023, H04L 9/08

(54) **DIAGNOSTIC DEVICE, METHOD THEREFOR AND SERVER**

(30) Priority: 20.06.2024 KR 20240080578
(71) Applicant: LG Energy Solution, Ltd., Seoul 07335 (KR)
(72) Inventor: KWON, Jung Hyun, Daejeon 34122 (KR)
(74) Representative: Plasseraud IP
(86) International application number: PCT/KR2025/004944
(87) International publication number: WO 2025/263779

(57) **Abstract**

A diagnosis device according to an embodiment of the present disclosure may include a memory storing at least one instruction and one or more first processors executing the at least one instruction, and the one or more first processors may transmit, to a server, identification information encrypted with at least one of a first vehicle identifier of a vehicle on which the diagnosis device is mounted, a first device identifier of the diagnosis device, or any combination thereof and diagnose a state of the vehicle corresponding to vehicle information registered in the server based on receiving, from the server, a signal indicating that authentication of the diagnosis device is completed.

## Description

### TECHNICAL FIELD

### Cross-reference to Related Applications

This application claims priority from Korean Patent Application No. 10-2024-0080578, filed on June 20, 2024, the disclosure of which is incorporated by reference herein.

### Technical Field

Embodiments disclosed herein relates to a diagnosis device, a method thereof, and a server.

### BACKGROUND ART

In recent years, research and development for secondary batteries have been actively conducted. Here, secondary batteries are batteries capable of being recharged and discharged, and may be interpreted to encompass both conventional Ni/Cd batteries, Ni/MH batteries, or the like, and recent lithium ion batteries. In recent years, the lithium ion batteries have expanded their range of use to power sources for electric vehicles, making the batteries attract attention as a next-generation energy storage medium.

With the advancement of mobility technology, technologies for monitoring and diagnosing a vehicle are being developed. In particular, remote diagnosis methods are being introduced to shorten the time required for vehicle diagnosis. Remote diagnostics are efficient as they may reduce the time spent transporting the vehicle to a repair shop. In addition, remote diagnostics may contribute to reducing the frequency of visits to repair shops and reducing vehicle maintenance costs. In order to perform such remote diagnostics, a process of authenticating the vehicle equipped with a diagnosis device as being is a user's vehicle is required. The diagnosis device may protect personal information and ensure user safety by diagnosing the state of the vehicle after authenticating the vehicle.

### DISCLOSURE OF THE INVENTION

### TECHNICAL PROBLEM

According to embodiments disclosed herein, it is intended to provide a diagnosis device, a method thereof, and a server for authenticating a diagnosis device as being mounted on a user's vehicle.

According to embodiments disclosed herein, it is intended to provide a diagnosis device, a method thereof, and a server for protecting personal information by authenticating a diagnosis device as being mounted on a user's vehicle.

According to embodiments disclosed herein, it is intended to provide a diagnosis device, a method thereof, and a server for ensuring the safety of a user by protecting personal information.

The technical problems of the present disclosure are not limited to those mentioned above, and other objectives not mentioned will be clearly understood by those skilled in the art from the following descriptions.

### TECHNICAL SOLUTION

A diagnosis device according to an embodiment of the present disclosure may include a memory storing at least one instruction and one or more first processors executing the at least one instruction.

According to an embodiment, the one or more first processors may transmit, to a server, identification information encrypted with at least one of a first vehicle identifier of a vehicle on which the diagnosis device is mounted, a first device identifier of the diagnosis device, or any combination thereof and diagnose a state of the vehicle corresponding to vehicle information registered in the server based on receiving, from the server, a signal indicating that authentication of the diagnosis device is completed.

According to an embodiment, the one or more first processors may transmit, to the server, the identification information encrypted with only one identifier of the first vehicle identifier and the first device identifier, receive, from the server, verification information encrypted with any one identifier of a second device identifier acquired from the server and a second vehicle identifier acquired from the vehicle information, which does not correspond to the one identifier, decrypt the verification information, and diagnose the state of the vehicle that matches a vehicle registered in the server based on one identifier of the first device identifier and the first vehicle identifier corresponding to the decrypted verification information.

According to an embodiment, the one or more first processors may identify the identification information based on at least one of a random number generator, an initial vector, a reference time, an asymmetric key, or any combination thereof, all of which are stored.

According to an embodiment, the one or more first processors may store at least one of the random number generator, the initial vector, the reference time, the asymmetric key, or any combination thereof in a trust zone.

A server according to another embodiment of the present disclosure may include a memory storing at least one instruction, and one or more second processors executing the instruction.

According to an embodiment, the one or more second processors may decrypt encrypted identification information received from the diagnosis device and transmit, to the diagnosis device, a signal indicating that authentication of the diagnosis device is completed based on the decrypted identification information corresponding to at least one of a second vehicle identifier of a vehicle of a user receiving the diagnosis device, a second device identifier of the diagnosis device provided to the user, or any combination thereof.

According to an embodiment, the one or more second processors may decrypt the identification information encrypted with only one identifier of a first vehicle identifier acquired from the diagnosis device and a first device identifier acquired from the diagnosis device, and transmit, to the diagnosis device, verification information encrypted with the other identifier of the second device identifier and the second vehicle identifier based on any one identifier of the second device identifier and the second vehicle identifier corresponding to the decrypted identification information.

According to an embodiment, the one or more second processors may acquire at least one of the second device identifier, a name of the user, a vehicle number of the user, or any combination thereof from a second external server, retrieve at least one of the name of the user, the vehicle number of the user, or any combination thereof in a first external server, and acquire the second vehicle identifier from the first external server based on a retrieved result.

According to an embodiment, the first external server may include a server that retrieves a vehicle registration book through at least one of the name of the user, the vehicle number of the user, or any combination thereof, and the second external server may include a server through which the user applies to receive the diagnosis device.

According to an embodiment, the one or more second processors may decrypt the encrypted identification information received from the diagnosis device based on at least one of a random number generator, an initial vector, a reference time, an asymmetric key corresponding to an asymmetric key stored in the diagnosis device and different from the asymmetric key, or any combination thereof, all of which are stored.

A diagnosis method according to another embodiment of the present disclosure may include transmitting, by one or more first processors included in a diagnosis device, to a server, identification information encrypted with at least one of a first vehicle identifier of a vehicle on which the diagnosis device is mounted, a first device identifier of the diagnosis device, or any combination thereof, decrypting, by the one or more second processors included in the server, encrypted identification information received from the diagnosis device, transmitting, by the one or more second processors, to the diagnosis device, a signal indicating that authentication of the diagnosis device is completed based on the decrypted identification information corresponding to at least one of a second vehicle identifier of a vehicle of a user receiving the diagnosis device, a second device identifier of the diagnosis device provided to the user, or any combination thereof, and diagnosing, by one or more first processors, a state of the vehicle corresponding to vehicle information registered in the server based on receiving, from the server, the signal indicating that authentication of the diagnosis device is completed.

According to an embodiment, the transmitting, by the one or more first processors, to the server, of the identification information encrypted with at least one of the first vehicle identifier of the vehicle on which the diagnosis device is mounted, the first device identifier of the diagnosis device, or any combination thereof may include transmitting, by the one or more first processors, to the server, the identification information encrypted with only one identifier of the first vehicle identifier and the first device identifier. The diagnosis method may further include decrypting, by the one or more second processors, the identification information, transmitting, by the one or more second processors, to the diagnosis device, verification information encrypted with the other identifier of the second device identifier and the second vehicle identifier based on any one identifier of the second device identifier and the second vehicle identifier corresponding to the decrypted identification information, receiving, by the one or more first processors, the encrypted verification information from the server, decrypting, by the one or more first processors, the verification information, and diagnosing, by the one or more first processors, a state of the vehicle that matches a vehicle registered in the server based on one identifier of the first device identifier and the first vehicle identifier corresponding to the decrypted verification information.

According to an embodiment, the transmitting, by the one or more first processors, to the server, of the identification information encrypted with at least one of the first vehicle identifier of the vehicle on which the diagnosis device is mounted, the first device identifier of the diagnosis device, or any combination thereof may include identifying, by the one or more first processors, the identification information based on at least one of a random number generator, an initial vector, a reference time, an asymmetric key, or any combination thereof, all of which are stored.

According to an embodiment, the identifying, by the one or more first processors, of the identification information based on at least one of the stored random number generator, the initial vector, the reference time, the asymmetric key, or any combination thereof may include storing, by the one or more first processors, at least one of the random number generator, the initial vector, the reference time, the asymmetric key, or any combination thereof in a trust zone.

According to an embodiment, the diagnosis method may further include acquiring, by the one or more second processors, at least one of the second device identifier, a name of the user, a vehicle number of the user, or any combination thereof from a second external server, retrieving, by the one or more second processors, at least one of the name of the user, the vehicle number of the user, or any combination thereof in a first external server, and acquiring, by the one or more second processors, the second vehicle identifier from the first external server based on a retrieved result.

According to an embodiment, the first external server may include a server that retrieves a vehicle registration book through at least one of the name of the user, the vehicle number of the user, or any combination thereof, and the second external server may include a server through which the user applies to receive the diagnosis device.

According to an embodiment, the decrypting, by the one or more second processors, of the identification information may include decrypting, by the one or more second processors, the encrypted identification information received from the diagnosis device based on at least one of a stored random number generator, an initial vector, a reference time, an asymmetric key corresponding to an asymmetric key stored in the diagnosis device and different from the asymmetric key, or any combination thereof.

### ADVANTAGEOUS EFFECTS

The present technology can authenticate a diagnosis device as being mounted on a user's vehicle.

In addition, the present technology can protect personal information by authenticating a diagnosis device as being mounted in a user's vehicle.

In addition, the present technology can ensure user safety by protecting personal information.

Besides, various effects may be provided that are directly or indirectly identified through the present disclosure.

### BRIEF DESCRIPTION OF THE DRAWINGS

FIG. 1 is a block diagram showing a battery pack in a diagnosis device, a diagnosis method, and a server according to an embodiment of the present disclosure.
FIG. 2 is a block diagram showing a configuration of a diagnosis device in the diagnosis device, the diagnosis method, and the server according to an embodiment of the present disclosure.
FIG. 3 is a block diagram showing a configuration of a server, in the diagnosis device, the diagnosis method, and the server according to an embodiment of the present disclosure.
FIG. 4 is a block diagram showing a configuration of a diagnosis device, a server, a vehicle, a first external server, and a second external server in the diagnosis device, the diagnosis method, and the server according to an embodiment of the present disclosure.
FIG. 5 shows an example of signaling between the diagnosis device, the server, the first external server, and the second external server performing authentication according to an embodiment, in the diagnosis device, the diagnosis method, and the server according to an embodiment of the present disclosure.
FIG. 6 shows an example of signaling between the diagnosis device, the server, the first external server, and the second external server performing authentication according to another embodiment, in the diagnosis device, the diagnosis method, and the server according to an embodiment of the present disclosure.
FIG. 7 shows an example of a flow of operations of a diagnosis device for diagnosing a state of a vehicle in the diagnosis device, the diagnosis method, and the server according to an embodiment of the present disclosure.
FIG. 8 is a block diagram showing a hardware configuration of a computing system for performing a diagnosis method in the diagnosis device, the diagnosis method, and the server according to an embodiment of the present disclosure.

### MODE FOR CARRYING OUT THE INVENTION

Hereinafter, some embodiments disclosed herein are described with reference to the accompanying drawings of various embodiments of the present disclosure. However, this is not intended to limit the present technology to the specific embodiments, and it is to be construed to include various modifications, equivalents, and/or alternatives of embodiments of the present technology.

In adding reference numerals to the components of each drawing, it should be noted that the same components are given the same reference numerals as much as possible even though they are shown on different drawings. In addition, in describing various embodiments disclosed herein, when a detailed description of a related known configuration or function is determined to hinder understanding of the embodiments of the present invention, the detailed description thereof is omitted. It is to be understood that a singular form of a noun corresponding to an item may include one or more of the things, unless the relevant context clearly indicates otherwise.

In addition, in describing a component of the embodiments of the present disclosure, terms such as first, second, A, B, (a), (b), etc. may be used. These terms are only for distinguishing the component from other components, and the essence, sequence, or order of the component may not be limited by the terms. In addition, unless otherwise defined, all terms used herein, including technical or scientific terms, have the same meaning as commonly understood by those of ordinary skill in the art to which the embodiments disclosed herein belong. Terms, such as those defined in commonly used dictionaries, should be interpreted as having a meaning that is consistent with their meaning in the context of the related art and will not be interpreted in an idealized or overly formal sense unless expressly so defined herein.

In addition, in the present disclosure, in order to determine whether a specific condition is satisfied or fulfilled, expressions "more than" or "less than" may be used, but this is only a description for expressing an example and does not exclude descriptions of "equal to or more than" or "less than or equal to." A condition described as "equal to or more than" may be replaced with "more than," a condition described as "less than or equal to" may be replaced with "less than," and a condition described as "equal to or more than and less than" may be replaced with "more than and less than or equal to." In addition, hereinafter, "A to B" mean at least one of the elements from A (inclusive of A) to B (inclusive of B).

In the present disclosure, each of phrases such as "A or B," "at least one of A and B," "at least one of A or B," "A, B or C," "at least one of A, B and C," or "at least one of A, B, or C," may include any one of the items listed in the phrase, or all possible combinations of the phrases.

In the present specification, It is to be understood that if an element (e.g., a first element) is referred to, with or without the term "operatively" or "communicatively," as "connected to," "coupled to," or "in contact with" another element (e.g., a second element), it means that the element may be connected to the other element directly (e.g., by wire or wirelessly) or via a third element.

According to an embodiment, a method according to various embodiments disclosed herein may be included and provided in a computer program product. The computer program product may be traded as a product between a seller and a buyer. The computer program product may be distributed in the form of a machine-readable storage medium (e.g., a compact disc read only memory (CD-ROM)), or be distributed (e.g., downloaded or uploaded) online via an application store, or between two user devices directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the described components may include a single entity or multiple entities, and some of the plurality of entities may be disposed separately from other components. According to various embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as those performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

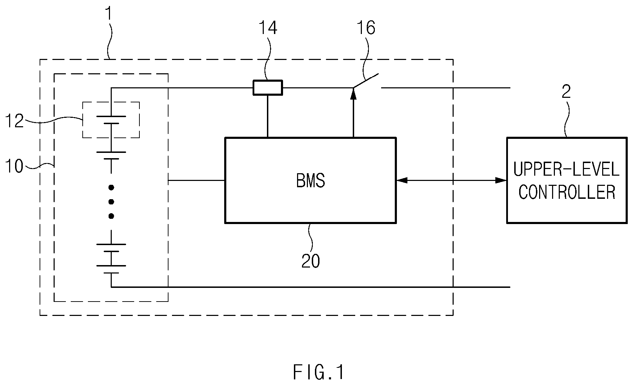

Hereinafter, embodiments of the present disclosure will be described in detail with reference to FIGS. 1 to 8.

FIG. 1 is a block diagram showing a battery pack in a diagnosis device, a diagnosis method, and a server according to an embodiment of the present disclosure.

Referring to FIG. 1, a battery pack 1 may include a battery unit 12, a sensor unit 14, a switching unit 16, and a battery management system (BMS) 20. In this case, the battery pack 1 may be equipped with a plurality of battery units 12, sensor units 14, switching units 16, and battery management systems 20.

According to an embodiment, the battery unit 12 may supply power to a target device (not shown). For this purpose, the battery unit 12 may be electrically connected to the target device. Here, the target device may include an electrical, electronic, or mechanical device that operates by receiving power from the battery pack 1. For example, the target device may be an electric vehicle (EV) or an energy storage system (ESS), but is not limited thereto.

According to an embodiment, the battery unit 12 may include at least one battery cell 10 that is rechargeable and dischargeable. Here, the battery cell 10 may be a basic unit of a battery cell that may be used by being charged and discharged with electric energy. For example, the battery cell 10 may be a lithium ion (Li-ion) battery, a lithium ion (Li-ion) polymer battery, a nickel cadmium (Ni-Cd) battery, a nickel hydrogen (Ni-MH) battery, or the like, and may not be limited thereto.

According to an embodiment, a plurality of battery units 12 may be connected in series or in parallel. For example, the battery unit 12 may be a battery module, a battery bank, or a collection of battery cells (cell-to-pack structure).

According to an embodiment, the sensor unit 14 may acquire information related to the battery unit 12. According to an embodiment, the sensor unit 14 may acquire values (or information) related to the state of each of the battery units 12 or battery cells 10. In an embodiment, the state-related values may include one or more values for voltage, current, resistance, state of charge (SOC), state of health (SOH), or temperature of the battery cell, or a combination thereof.

According to an embodiment, the sensor unit 14 may provide information on each of the plurality of battery units 12 to the battery management system 20.

According to an embodiment, the switching unit 16 may include a device for controlling the current flow for charging or discharging the battery unit 12. For example, the switching unit 16 may include at least one relay and/or magnetic contactor, depending on the specifications of the battery pack 1.

According to an embodiment, the battery management system (BMS) 20 may control or manage the battery pack 1 to prevent overcharge and over-discharge by monitoring the voltage, current, temperature, and the like of the battery pack 1. For example, the battery management system 20 may be an interface for receiving values obtained by measuring the above-mentioned various parameters, and may include a plurality of terminals, a circuit connected to the terminals to process input values, or the like. In addition, the battery management system 20 may control the sensor unit 14 and/or the switching unit 16. For example, the battery management system 20 may be connected to a plurality of battery units 12 to monitor the state of each of the plurality of battery units 12 and control ON/OFF of the relay, the contactor, or the like.

According to an embodiment, the operation of the battery management system 20 may be performed by the BMS (battery management system) in a vehicle, as well as by various devices such as a server, a cloud, a charger, a discharger, or the like.

An upper-level controller 2 may transmit a control signal for the plurality of battery units 12 to the battery management system 20. Accordingly, the operation of the battery management system 20 may be controlled based on the signal received from the upper controller 2.

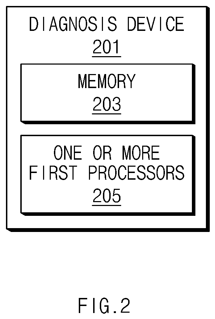

According to an embodiment, the battery management system 20 may include a diagnosis device 201 in FIG. 2. In another embodiment, the battery management system 20 may be a system different than the diagnosis device 201 in FIG. 2. That is, the diagnosis device 201 in FIG. 2 may be included in the battery pack 1 or may be configured as another device external to the battery pack 1. For convenience of explanation, the following description assumes that the diagnosis device 201 is constructed as another device external to the battery pack 1. In addition, the operation of the diagnosis device 201 below may be performed by a battery management system (BMS) in the vehicle, as well as by various devices such as a server, a cloud, a charger, a discharger, or the like.

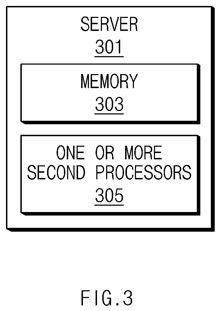

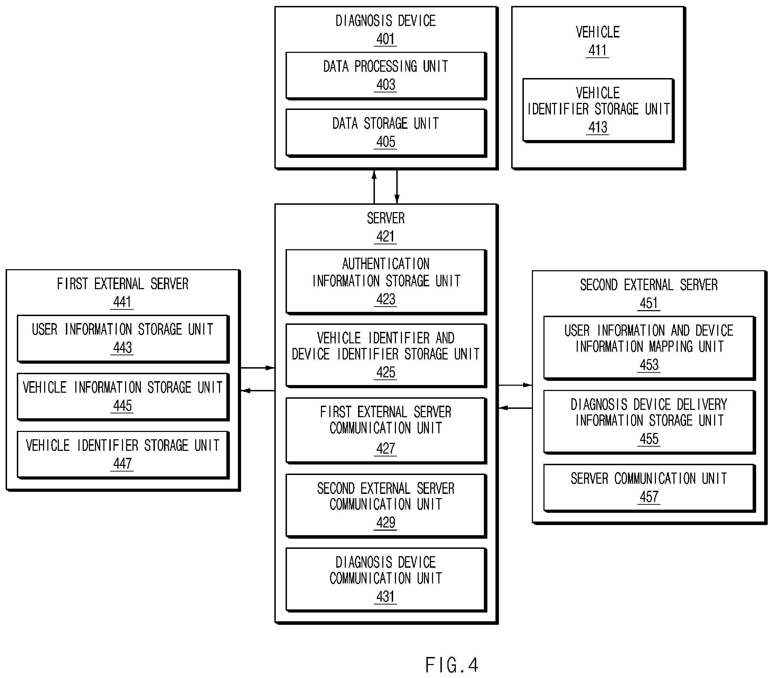

FIG. 2 is a block diagram showing a configuration of a diagnosis device, in the diagnosis device, the diagnosis method, and the server according to an embodiment of the present disclosure. FIG. 3 is a block diagram showing a configuration of a server, in a diagnosis device, a diagnosis method, and the server according to an embodiment of the present disclosure. FIG. 4 is a block diagram showing a configuration of the diagnosis device, the server, a vehicle, a first external server, and a second external server in the diagnosis device, the diagnosis method, and the server according to an embodiment of the present disclosure.

Referring to FIGS. 2 to 4, a memory 203 of a diagnosis device 201 or a diagnosis device 401 may store at least one instruction. One or more first processors 205 of the diagnosis device 201 or 401 may execute at least one instruction. The diagnosis device 201 or 401 may include a data processing unit 403 and a data storage unit 405.

A memory 303 of a server 301 or a server 421 may store at least one instruction. A second processor 305 of the server 301 or 421 may execute at least one instruction. The server 301 or 421 may include an authentication information storage unit 423, a vehicle identifier and device identifier storage unit 425, a first external server communication unit 427, a second external server communication unit 429, and a diagnosis device communication unit 431.

A first external server 441 may include a user information storage unit 443, a vehicle information storage unit 445, and a vehicle identifier storage unit 447. A second external server 451 may include a user information and diagnosis device information mapping unit 453, a diagnosis device delivery information storage unit 455, and a server communication unit 457. A vehicle 411 may include a vehicle identifier storage unit 413.

According to an embodiment, the diagnosis device 201 or 401 may be attached to the vehicle 411 to monitor and diagnose the state of the vehicle 411 (e.g., the state of a battery in the vehicle). The diagnosis device 201 or 401 may be referred to as an on-board diagnostics (OBD) or on-board device (OBD), but the embodiments of the present disclosure may not be limited thereto.

According to an embodiment, a user of the vehicle 411 may request the second external server 451 (e.g., a diagnosis device application server) to deliver the diagnosis device 201 or 401 to the user. The second external server 451 may deliver the diagnosis device 201 or 401 to the user. The user may diagnose the state of the vehicle 411 through the delivered diagnosis device 201 or 401. However, when the state of a vehicle other than the vehicle 411 of the user is diagnosed through the diagnosis device 201 or 401, personal information may not be protected. In order to protect personal information, an authentication method may be required to verify whether the diagnosis device 201 or 401 delivered to the user by the second external server 451 diagnoses the state of the vehicle 411 of the user. Authentication of the diagnosis device 201 or 401 may be performed through communication between the server 301 or 421 and the diagnosis device 201 or 401.

According to an embodiment, the diagnosis device 201 or 401 or the server 301 or 421 may compare a first vehicle identifier of the vehicle to which the diagnosis device 201 or 401 is attached with a second vehicle identifier of the vehicle 411 of the user who has requested delivery of the diagnosis device 201 or 401, and compare a first device identifier of the diagnosis device 201 or 401 delivered to the user with a second device identifier stored in the server 301 or 421 of the diagnosis device 201 or 401 that has delivered the diagnosis device 201 or 401 to the user, thereby performing authentication of the diagnosis device 201 or 401. The process by which authentication is performed is described below.

According to an embodiment, the user of the vehicle 411 may request the second external server 451 (e.g., a diagnosis device application server) to deliver the diagnosis device 201 or 401 to the user. In order to deliver the diagnosis device 201 or 401 to the user, the second external server 451 may receive user information (e.g., the user's name) and information (e.g., vehicle number) on the user's vehicle from the user. The second external server 451 may include a server through which the user makes the request to receive the diagnosis device 201 or 401. An operator of the second external server 451 may include a diagnosis device rental company, a vehicle state management company, or a battery state diagnosis company, but the embodiment of the present disclosure may not be limited thereto.

When the user requests the delivery of the diagnosis device 201 or 401 to the second external server 451, the second external server 451 may perform a procedure for transmitting the diagnosis device 201 or 401 to the user and transmit user information, diagnosis device information, and vehicle information to the server 301 or 421.

For example, the second external server 451 may check the address to which the diagnosis device 201 or 401 is to be delivered based on user information through the diagnosis device delivery information storage unit 455 and perform a delivery procedure to deliver the diagnosis device 201 or 401 to the checked address.

For example, the second external server 451 may map and store user information and diagnosis device information about the diagnosis device 201 or 401 to be delivered to the user through the user information and diagnosis device information mapping unit 453. The diagnosis device information may be referred to as a second device identifier in the present disclosure. The second device identifier may include a serial number, but embodiments of the present disclosure may not be limited thereto.

For example, the second external server 451 may transmit the user information, the second device identifier, and the vehicle information to the server 301 or 421 through the server communication unit 457.

According to an embodiment, one or more second processors 305 of the server 301 or 421 may receive the user information, the second device identifier, and the vehicle information from the second external server 451 through the second external server communication unit 429.

According to an embodiment, one or more second processors 305 of the server 301 or 421 may transmit the user information and the vehicle information to the first external server 441 through the first external server communication unit 427. The first external server 441 may include a server that retrieves the vehicle registration book using the user information and the vehicle information. The one or more second processors 305 of the server 301 or 421 may retrieve the user information and a vehicle number in the first external server 441 and, based on the retrieved result, acquire a second vehicle identifier from the first external server 441. The one or more second processors 305 of the server 301 or 421 may map and store the second vehicle identifier and the second device identifier acquired through the vehicle identifier and device identifier storage unit 425.

The first external server 441 may identify the second vehicle identifier including a vehicle identifier (e.g., a vehicle identification number) that is stored in the vehicle identifier storage unit 447 and corresponds to the user information and the vehicle information based on the user information (e.g., the vehicle owner name) stored in the user information storage unit 443 and the vehicle information

(e.g., the vehicle number) stored in the vehicle information storage unit 445. The vehicle identification number may represent an identification number used for legal purposes to register or maintain ownership of the vehicle.

According to an embodiment, the diagnosis device 201 or 401 delivered to the user may acquire the first vehicle identifier stored in the vehicle identifier storage unit 413 of the mounted vehicle 411 after being mounted on the vehicle 411.

The one or more first processors 205 of the diagnosis device 201 or 401 may go through an authentication process to identify whether the diagnosis device is mounted on the vehicle 411 of the user before diagnosing the state of the mounted vehicle 411. Therefore, after being mounted on the vehicle 411, the one or more first processors 205 of the diagnosis device 201 or 401 may store at least one of the first vehicle identifier, the first device identifier of the diagnosis device 201 or 401, or any combination thereof in the data storage unit 405 before diagnosing the state of the vehicle 411. In addition, the one or more first processors 205 of the diagnosis device 201 or 401 may generate identification information encrypted with at least one of the first vehicle identifier, the first device identifier, or any combination thereof through the data processing unit 403. The one or more first processors 205 of the diagnosis device 201 or 401 may transmit the generated identification information to the server 301 or 421.

According to an embodiment, the data processing unit 403 may include at least one of a random number generator, an initial vector, a reference time, an asymmetric key, or any combination thereof. The asymmetric key stored in the diagnosis device 201 or 401 may correspond to an asymmetric key stored in the server 301 or 421, and may be different from the asymmetric key stored in the server 301 or 421. The one or more first processors 205 of the diagnosis device 201 or 401 may store at least one of the random number generator, the initial vector, the reference time, the asymmetric key, or any combination thereof in a trust zone through the data processing unit 403. According to an embodiment, the one or more first processors 205 of the diagnosis device 201 or 401 may encrypt at least one of the first vehicle identifier, the first device identifier, or any combination thereof based on at least one of the random number generator, the initial vector, the reference time, the asymmetric key, or any combination thereof through the data processing unit 403.

According to an embodiment, the identification information may include information encrypted with only one identifier of the first vehicle identifier and the first device identifier, or may include information encrypted with the first vehicle identifier and the first device identifier.

According to an embodiment, when the identification information includes the information encrypted with only one identifier of the first vehicle identifier and the first device identifier, the one or more second processors 305 of the server 301 or 421 may receive the identification information through the diagnosis device communication unit 431.

According to an embodiment, the one or more second processors 305 of the server 301 or 421 may decrypt the identification information to determine which one of the second device identifier and the second vehicle identifier corresponds to the identifier according to the decrypted identification information. When one of the second device identifier and the second vehicle identifier according to the identification information identifier corresponds to the decrypted identification information, the one or more second processors 305 of the server 301 or 421 may generate verification information by encrypting the other identifier that does not correspond to the identifier according to the identification information, of the second device identifier and the second vehicle identifier, through the authentication information storage unit 423. The one or more second processors 305 of the server 301 or 421 may transmit the verification information to the diagnosis device 201 or 401.

The server 301 or 421 may store at least one of the random number generator, the initial vector, the reference time, the asymmetric key, or any combination thereof through the authentication information storage unit 423. The server 301 or 421 may generate the verification information based on at least one of the random number generator, the initial vector, the reference time, the asymmetric key, or any combination thereof stored through the authentication information storage unit 423, decrypt the identification information, and encrypt the other identifier that does not correspond to the identifier according to the identification information, of the second device identifier and the second vehicle identifier. The asymmetric key stored in the server 301 or 421 may correspond to the asymmetric key stored in the diagnosis device 201 or 401, and may be different from the asymmetric key stored in the diagnosis device 201 or 401.

According to an embodiment, the one or more processors 205 of the diagnosis device 201 or 401 may receive the verification information from the server 301 or 421. The one or more processors 205 of the diagnosis device 201 or 401 may decrypt the verification information. The one or more processors 205 of the diagnosis device 201 or 401 may diagnose the state of a vehicle 411 that matches a vehicle registered in the server 301 or 421 based on the second device identifier or the second vehicle identifier, which is identified by decrypting the verification information, corresponding to the first device identifier or the first vehicle identifier.

According to another embodiment, when the identification information includes information encrypted with the first vehicle identifier and the first device identifier, the one or more second processors 305 of the server 301 or 421 may receive the identification information through the diagnosis device communication unit 431.

According to an embodiment, the one or more second processors 305 of the server 301 or 421 may decrypt the identification information and determine whether the decrypted identification information corresponds to the second device identifier and the second vehicle identifier. When the decrypted identification information corresponds to the second device identifier and the second vehicle identifier, the one or more second processors 305 of the server 301 or 421 may transmit, to the diagnosis device 201 or 401, a signal indicating that authentication of the diagnosis device 201 or 401 is completed.

This is because, when the second vehicle identifier and the second device identifier identified through the second external server 451 and the first external server 441 match with the first vehicle identifier and the first device identifier identified through the diagnosis device 201 or 401 mounted on the vehicle 411, it is confirmed that the diagnosis device 201 or 401 delivered to the user by the second external server 451 diagnoses the state of the user's vehicle.

The one or more first processors 205 of the diagnosis device 201 or 401 may diagnose the state of the vehicle 411 corresponding to vehicle information registered in the server 301 or 421 based on receiving, from the server 301 or 421, the signal indicating that authentication of the diagnosis device 201 or 401 is completed.

According to an embodiment, the one or more second processors 305 of the server 301 or 421 may decrypt the identification information based on at least one of the random number generator, the initial vector, the reference time, the asymmetric key, or any combination thereof stored through the authentication information storage unit 423.

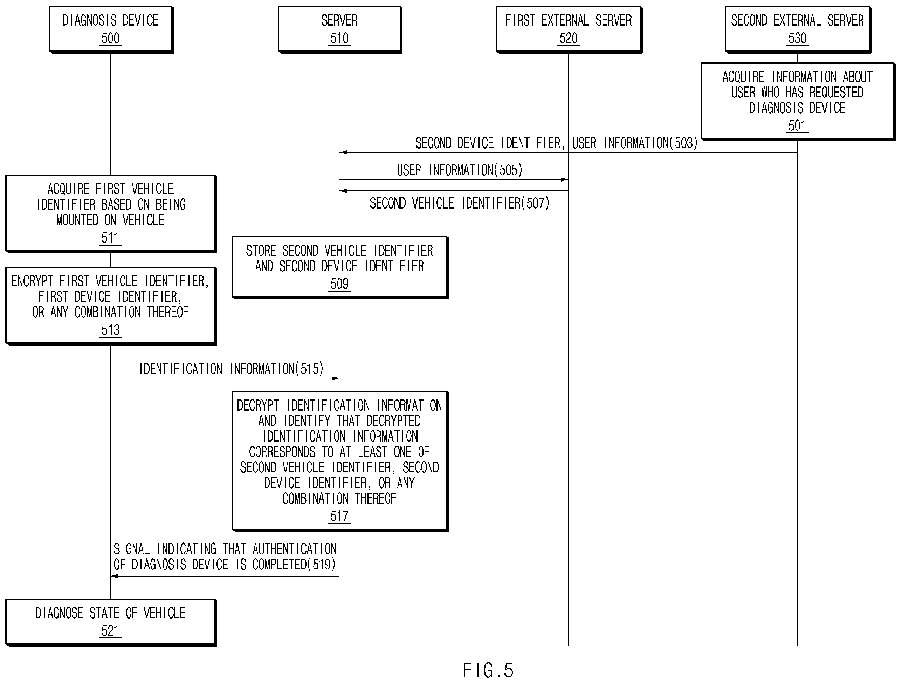

FIG. 5 shows an example of signaling between the diagnosis device, the server, the first external server, and the second external server performing authentication according to an embodiment, in the diagnosis device, the diagnosis method, and the server according to an embodiment of the present disclosure.

Referring to FIG. 5, in first operation 501, the second external server 451 or 530 according to an embodiment may acquire information about a user who has requested the diagnosis device 201, 401, or 500. The second external server 451 or 530 may identify a second device identifier of the diagnosis device 201, 401, or 500 to be delivered to the user.

In second operation 503, the second external server 451 or 530 according to an embodiment may transmit the second device identifier and user information to the server 301, 421, or 510. The server 301, 421, or 510 may receive the second device identifier and the user information from the second external server 451 or 530.

In third operation 505, the server 301, 421, or 510 according to an embodiment may transmit the user information to the first external server 441 or 520. The first external server 441 or 520 may receive the user information from the server 301, 421, or 510.

In fourth operation 507, the first external server 441 or 520 according to an embodiment may transmit the second vehicle identifier corresponding to the user information to the server 301, 421, or 510. The server 301, 421, or 510 may receive the second vehicle identifier corresponding to the user information from the first external server 441 or 520.

In fifth operation 509, the server 301, 421, or 510 according to an embodiment may store the second vehicle identifier and the second device identifier.

In sixth operation 511, the diagnosis device 201, 401, or 500 according to an embodiment may acquire the first vehicle identifier based on the diagnosis device 201, 401, or 500 being mounted on the vehicle.

In seventh operation 513, the diagnosis device 201, 401, or 500 according to an embodiment may encrypt the first vehicle identifier, the first device identifier, or any combination thereof.

In eighth operation 515, the diagnosis device 201, 401, or 500 according to an embodiment may transmit, to the server 301, 421, or 510, identification information encrypted with the first vehicle identifier, the first device identifier, or any combination thereof. The server 301, 421, or 510 may receive the identification information from the diagnosis device 201, 401, or 500.

In ninth operation 517, the server 301, 421, or 510 according to an embodiment may decrypt the identification information and identify that the decrypted identification information corresponds to at least one of the second vehicle identifier, the second device identifier, or any combination thereof.

In tenth operation 519, the server 301, 421, or 510 according to an embodiment may transmit, to the diagnosis device 201, 401, or 500, a signal indicating that authentication of the diagnosis device is completed. The diagnosis device 201, 401, or 500 may receive, from the server 301, 421, or 510, the signal indicating that authentication of the diagnosis device 201, 401, or 500 is completed.

In other words, the server 301, 421, or 510 according to an embodiment may transmit, to the diagnosis device 201, 401, or 500, the signal indicating that authentication of the diagnosis device 201, 401, or 500 is completed based on the decrypted identification information corresponding to at least one of the second vehicle identifier, the second device identifier, or any combination thereof.

In eleventh operation 521, the diagnosis device 201, 401, or 500 according to an embodiment may diagnose the state of the vehicle.

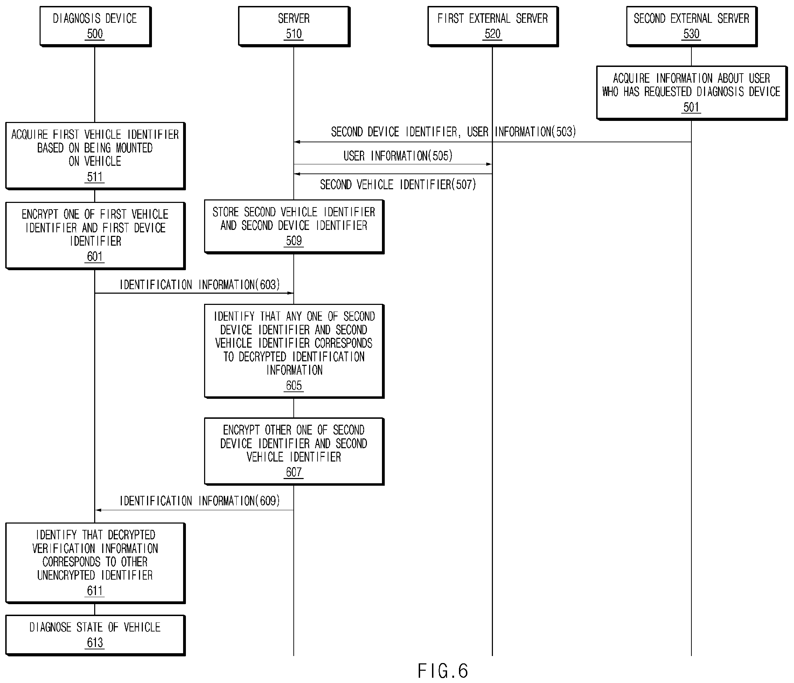

FIG. 6 shows an example of signaling between the diagnosis device, the server, the first external server, and the second external server performing authentication according to an embodiment, in the diagnosis device, the diagnosis method, and the server according to an embodiment of the present disclosure.

Referring to FIG. 6, first operation 501 to sixth operation 511 may be identical to the operations of FIG. 5. Accordingly, the description of first operation 501 to sixth operation 511 is omitted.

In seventh operation 601, the diagnosis device 201, 401, or 500 according to an embodiment may encrypt one identifier of a first vehicle identifier and a first device identifier. The diagnosis device 201, 401, or 500 according to an embodiment may generate identification information by encrypting one identifier of the first vehicle identifier and the first device identifier.

In eighth operation 603, the diagnosis device 201, 401, or 500 according to an embodiment may transmit the identification information to the server 301, 421, or 510. The server 301, 421, or 510 may receive the identification information from the diagnosis device 201, 401, or 500.

In ninth operation 605, the server 301, 421, or 510 according to an embodiment may identify that either the second device identifier or the second vehicle identifier corresponds to the decrypted identification information.

In tenth operation 607, the server 301, 421, or 510 according to an embodiment may encrypt the other one of the second device identifier and the second vehicle identifier. The other may represent an identifier that does not correspond to the decrypted identification information, of the second device identifier and the second vehicle identifier.

In eleventh operation 609, the server 301, 421, or 510 according to an embodiment may transmit verification information to the diagnosis device 201, 401, or 500. The diagnosis device 201, 401, or 500 may receive the verification information from the server 301, 421, or 510. The verification information may include information encrypted with an identifier that does not correspond to the decrypted identification information, of the second device identifier and the second vehicle identifier.

In twelfth operation 611, the diagnosis device 201, 401, or 500 according to an embodiment may identify that the decrypted verification information corresponds to the other unencrypted identifier. The other unencrypted identifier may represent an identifier unencrypted in seventh operation 601, of the first device identifier and the first vehicle identifier.

In thirteenth operation 613, the diagnosis device 201, 401, or 500 according to an embodiment may diagnose the state of the vehicle.

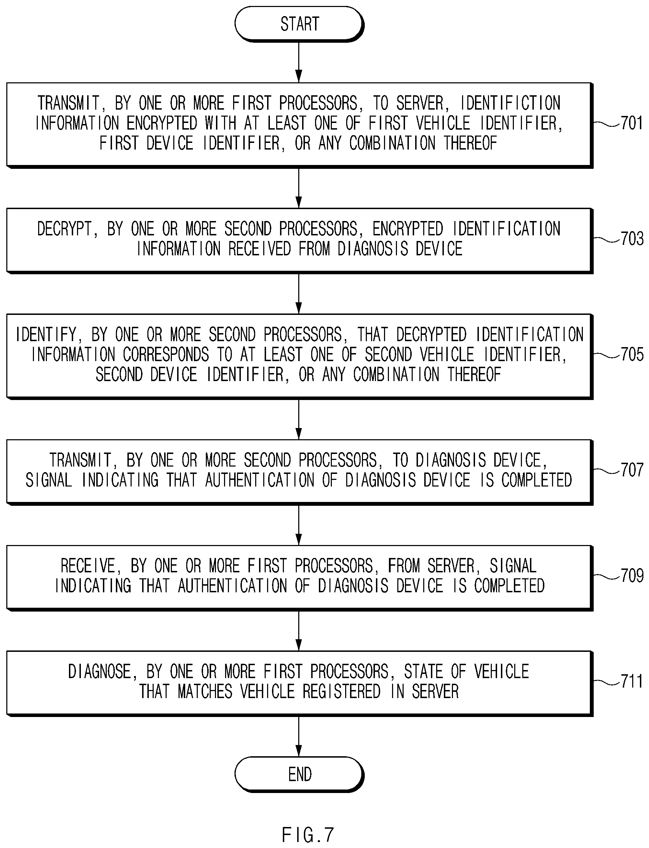

FIG. 7 shows an example of a flow of operations of a diagnosis device for diagnosing a state of a vehicle in the diagnosis device, the diagnosis method, and the server according to an embodiment of the present disclosure.

Referring to FIG. 7, in first operation 701, according to an embodiment, one or more first processors 205 may transmit identification information encrypted with at least one of a first vehicle identifier, a first device identifier, or any combination thereof to the server 301, 421, or 510.

In second operation 703, according to an embodiment, one or more second processors 305 may decrypt the encrypted identification information received from the diagnosis device 201, 401, or 500.

In third operation 705, according to an embodiment, the one or more second processors 305 may identify that the decrypted identification information corresponds to at least one of a second vehicle identifier, a second device identifier, or any combination thereof.

In fourth operation 707, according to an embodiment, the one or more second processors 305 may transmit, to the diagnosis device 201, 401, or 500, a signal indicating that authentication of the diagnosis device 201, 401, or 500 is completed.

In fifth operation 709, according to an embodiment, the one or more first processors 205 may receive, from the server 301, 421, or 510, the signal indicating that authentication of the diagnosis device 201, 401, or 500 is completed.

In sixth operation 711, according to an embodiment, the one or more first processors 205 may diagnose the state of the vehicle that matches a vehicle registered in the server 301, 421, or 510.

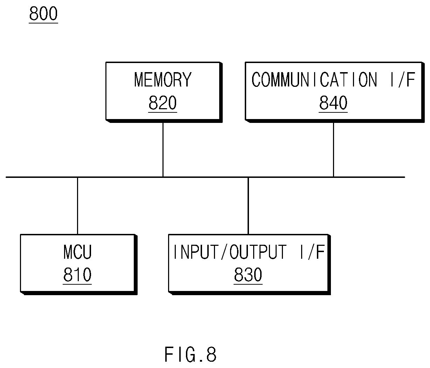

FIG. 8 is a block diagram showing a hardware configuration of a computing system for performing a diagnosis method in the diagnosis device, the diagnosis method, and the server according to an embodiment of the present disclosure.

Referring to FIG. 8, a computing system 800 according to an embodiment disclosed herein may include a microcontroller unit (MCU) 810, a memory 820, an input/output interface (I/F) 830, and a communication I/F 840.

The MCU 810 may be one or more processors that execute various programs (e.g., a battery cell data collection program, a graph generation program, a data analysis program, a data decomposition algorithm, a normalization program, a battery cell diagnosis program, and the like) stored in the memory 820, process various pieces of information including battery cell characteristic data, latent variables, and the like through the programs, and perform functions of the diagnosis device 201 or the server 301 shown in the above-described FIGS. 2 to 7.

The memory 820 may store various programs such as the battery cell data collection program, the graph generation program, the data analysis program, the data decomposition algorithm, the normalization program, the battery cell diagnosis program, and the like.

A plurality of memories 820 may be provided as needed. The memory 820 may be a volatile memory or non-volatile memory. As the volatile memory, the memory 820 may be a random access memory (RAM), dynamic RAM (DRAM), static RAM (SRAM), or the like. As the nonvolatile memory, for the memory 820, a read-only memory (ROM), a programmable ROM (PROM), an electrically alterable ROM (EAROM), an erasable programmable ROM (EPROM), an electrically erasable programmable ROM (EEPROM), a flash memory, or the like. The examples of memories 820 listed above are only exemplary and are not limited to the examples.

The input/output I/F 830 may provide an interface that enables data to be transmitted and received by connecting an input device (not illustrated) such as a keyboard, mouse, or touch panel, and an output device (not illustrated) such as a display and the MCU 810.

The communication I/F 840 is a component capable of transmitting and receiving various data with a server, and may be any device capable of supporting wired or wireless communication. For example, the diagnosis device 201 may transmit and receive various types of information, including a shape model of a battery cell or the like, to and from a separately provided external server through the communication I/F 840.

By being recorded in the memory 820 and processed by the MCU 810 in this way, a computer program according to an embodiment disclosed herein may be implemented, for example, as a module that performs each of the functions shown in FIG. 2.

Although all the components constituting the embodiments disclosed herein have been described as being combined or operating in combination as one, the embodiments disclosed herein are not necessarily limited to these embodiments. That is, within the scope of the purpose of the embodiments disclosed herein, all of the components may be selectively combined and operated one or more times.

Terms such as "include," "comprise," or "have" described above mean that the corresponding component can be present unless otherwise stated, and thus it should be construed that other components may be further included rather than excluding other components. All terms including technical or scientific terms have the same meaning as commonly understood by those of ordinary skill in the art to which embodiments disclosed herein belong, unless otherwise defined. Terms commonly used such as those defined in dictionaries should be interpreted as having a meaning that is consistent with their meaning in the context of the related art and will not be interpreted in an idealized or overly formal sense unless expressly so defined herein.

The foregoing disclosure outlines features of several embodiments so that those skilled in the art may better understand the aspects of the present disclosure. Those skilled in the art will appreciate that the present disclosure may readily serve as a basis for designing or modifying other structures for carrying out the same purposes or achieving the same advantages of the embodiments introduced herein. Furthermore, those skilled in the art will recognize that such equivalent configurations do not depart from the scope of the present disclosure, and that various changes, substitutions, and modifications may be made herein without departing from the scope of the present disclosure.

## Claims

1. A diagnosis device comprising:
a memory storing at least one instruction; and
one or more first processors executing the at least one instruction,
wherein the one or more first processors are configured to:
transmit, to a server, identification information encrypted with at least one of a first vehicle identifier of a vehicle on which the diagnosis device is mounted, a first device identifier of the diagnosis device, or any combination thereof; and
diagnose a state of the vehicle corresponding to vehicle information registered in the server based on receiving, from the server, a signal indicating that authentication of the diagnosis device is completed.

2. The diagnosis device of claim 1, wherein the one or more first processors are configured to:
transmit, to the server, the identification information encrypted with only one identifier of the first vehicle identifier and the first device identifier;
receive, from the server, verification information encrypted with any one identifier of a second device identifier acquired from the server and a second vehicle identifier acquired from the vehicle information, which does not correspond to the one identifier;
decrypt the verification information; and
diagnose the state of the vehicle that matches a vehicle registered in the server based on one identifier of the first device identifier and the first vehicle identifier corresponding to the decrypted verification information.

3. The diagnosis device of claim 1, wherein the one or more first processors are configured to identify the identification information based on at least one of a random number generator, initial vector, reference time, asymmetric key, or any combination thereof, all of which are stored.

4. The diagnosis device of claim 3, wherein the one or more first processors are configured to store at least one of the random number generator, the initial vector, the reference time, the asymmetric key, or any combination thereof in a trust zone.

5. A server comprising:
a memory storing at least one instruction; and
one or more second processors executing the instruction, wherein the one or more second processors are configured to:
decrypt encrypted identification information received from the diagnosis device; and
transmit, to the diagnosis device, a signal indicating that authentication of the diagnosis device is completed based on the decrypted identification information corresponding to at least one of a second vehicle identifier of a vehicle of a user receiving the diagnosis device, a second device identifier of the diagnosis device provided to the user, or any combination thereof.

6. The server of claim 5, wherein the one or more second processors are configured to:
decrypt the identification information encrypted with only one identifier of a first vehicle identifier acquired from the diagnosis device and a first device identifier acquired from the diagnosis device; and
transmit, to the diagnosis device, verification information encrypted with the other identifier of the second device identifier and the second vehicle identifier based on any one identifier of the second device identifier and the second vehicle identifier corresponding to the decrypted identification information.

7. The server of claim 5, wherein the one or more second processors are configured to:
acquire at least one of the second device identifier, a name of the user, a vehicle number of the user, or any combination thereof from a second external server;
retrieve at least one of the name of the user, the vehicle number of the user, or any combination thereof in a first external server; and
acquire the second vehicle identifier from the first external server based on a retrieved result.

8. The server of claim 7, wherein the first external server includes a server that retrieves a vehicle registration book through at least one of the name of the user, the vehicle number of the user, or any combination thereof, and
the second external server includes a server through which the user applies to receive the diagnosis device.

9. The server of claim 5, wherein the one or more second processors are configured to decrypt the encrypted identification information received from the diagnosis device based on at least one of a random number generator, an initial vector, a reference time, an asymmetric key corresponding to an asymmetric key stored in the diagnosis device and different from the asymmetric key, or any combination thereof, all of which are stored.

10. A diagnosis method comprising:
transmitting, by a one or more first processors included in a diagnosis device, to a server, identification information encrypted with at least one of a first vehicle identifier of a vehicle on which the diagnosis device is mounted, a first device identifier of the diagnosis device, or any combination thereof;
decrypting, by a one or more second processors included in the server, encrypted identification information received from the diagnosis device;
transmitting, by the one or more second processors, to the diagnosis device, a signal indicating that authentication of the diagnosis device is completed based on the decrypted identification information corresponding to at least one of a second vehicle identifier of a vehicle of a user receiving the diagnosis device, a second device identifier of the diagnosis device provided to the user, or any combination thereof; and
diagnosing, by one or more first processors, a state of the vehicle corresponding to vehicle information registered in the server based on receiving, from the server, the signal indicating that authentication of the diagnosis device is completed.

11. The diagnosis method of claim 10, wherein the transmitting, by the one or more first processors, to the server, of the identification information encrypted with at least one of the first vehicle identifier of the vehicle on which the diagnosis device is mounted, the first device identifier of the diagnosis device, or any combination thereof includes transmitting, by the one or more first processors, to the server, the identification information encrypted with only one identifier of the first vehicle identifier and the first device identifier, and
the diagnosis method further comprises:
decrypting, by the one or more second processors, the identification information;
transmitting, by the one or more second processors, to the diagnosis device, verification information encrypted with the other identifier of the second device identifier and the second vehicle identifier based on any one identifier of the second device identifier and the second vehicle identifier corresponding to the decrypted identification information;
receiving, by the one or more first processors, the encrypted verification information from the server;
decrypting, by the one or more first processors, the verification information; and
diagnosing, by the one or more first processors, a state of the vehicle that matches a vehicle registered in the server based on one identifier of the first device identifier and the first vehicle identifier corresponding to the decrypted verification information.

12. The diagnosis method of claim 10, wherein the transmitting, by the one or more first processors, to the server, of the identification information encrypted with at least one of the first vehicle identifier of the vehicle on which the diagnosis device is mounted, the first device identifier of the diagnosis device, or any combination thereof includes identifying, by the one or more first processors, the identification information based on at least one of a random number generator, an initial vector, a reference time, an asymmetric key, or any combination thereof, all of which are stored.

13. The diagnosis method of claim 12, wherein the identifying, by the one or more first processors, of the identification information based on at least one of the stored random number generator, the initial vector, the reference time, the asymmetric key, or any combination thereof includes storing, by the one or more first processors, at least one of the random number generator, the initial vector, the reference time, the asymmetric key, or any combination thereof in a trust zone.

14. The diagnosis method of claim 10, further comprising:
acquiring, by the one or more second processors, at least one of the second device identifier, a name of the user, a vehicle number of the user, or any combination thereof from a second external server;
retrieving, by the one or more second processors, at least one of the name of the user, the vehicle number of the user, or any combination thereof in a first external server; and
acquiring, by the one or more second processors, the second vehicle identifier from the first external server based on a retrieved result.

15. The diagnosis method of claim 14, wherein the first external server includes a server that retrieves a vehicle registration book through at least one of the name of the user, the vehicle number of the user, or any combination thereof, and
the second external server includes a server through which the user applies to receive the diagnosis device.

16. The diagnosis method of claim 10, wherein the decrypting, by the one or more second processors, of the identification information includes decrypting, by the one or more second processors, the encrypted identification information received from the diagnosis device based on at least one of a stored random number generator, an initial vector, a reference time, an asymmetric key corresponding to an asymmetric key stored in the diagnosis device and different from the asymmetric key, or any combination thereof.
